# EUROPÄISCHE PATENTSCHRIFT

(11) **EP 3 708 878 B1**
(45) Veröffentlichungstag und Bekanntmachung des Hinweises auf die Patenterteilung: **19.04.2023**
(21) Anmeldenummer: 20172987.8
(22) Anmeldetag: 19.08.2016
(51) Int. Cl.: F16H 57/08, F16H 1/28

(54) **PLANETENTRÄGER**
PLANET CARRIER
SUPPORT EPICYCLOÏDAL

(43) Veröffentlichungstag der Anmeldung: 16.09.2020
(62) Teilanmeldung aus: 16184865.0
(73) Patentinhaber: Flender GmbH, 46395 Bocholt (DE)
(72) Erfinder: Klein-Hitpass, Arno, 52074 Aachen (DE)
(74) Vertreter: Michalski Hüttermann & Partner Patentanwälte mbB

(56) Entgegenhaltungen:
- WO-A1-2009/083657
- DE-A1- 10 334 824
- US-A1- 2012 028 756

## Beschreibung

Die vorliegende Erfindung betrifft einen Planetenträger.

Bei Planetenträgern mit zwei Wangen verdrehen sich die Wangen unter Last relativ zueinander. Die Höhe der Verdrehung hängt außer von dem auf den Planetenträger einwirkenden Drehmoment in hohem Maße von der Konstruktion des Planetenträgers ab. Eine solche Torsion eines Planetenträgers ist in Fig. 4 der WO2009/083657A1 (Moventas Oy) 09.07.2009 gezeigt.

Bei einem zweiwangigen Planetenträger ist es nicht möglich, durch eine Änderung der Stärken von Wangen oder Stegen die Relativverdrehung der beiden Wangen gegeneinander zu unterdrücken.

Aus DE 10 2011 075 915 A1, DE 103 34 824 A1 und US 2012/0028756 A1 sind zweiwangige Planetenträger mit an beiden Axialseiten abstehenden Naben bekannt.

Aus GB 2509242 A ist ein Planetenträger mit einem von einer Nabe nach radial innen abstehenden Befestigungsflansch bekannt.

Aus EP 1 045 140 B1 und US 8 287 421 B2 ist jeweils ein zweiwangiger Planetenträger mit einem nach radial außen abstehenden Befestigungsflansch bekannt.

Aus US 2013/0116083 A1 ist ein zweiwangiger Planetenträger mit zwei axial abstehenden Naben bekannt, wobei eine der Naben am von den Wangen wegweisenden Ende einen radial abstehenden Befestigungsflansch ausbildet.

Aus US 2004/0259679 A1 ist ein zweiwangiger Plantenträger bekannt, der mit Hilfe einer radial außen mit einem Planetenträgersteg befestigten und nach radial außen abstehenden Scheibe bewegungsfest fixiert werden kann.

Aus DE 10 2011 104 291 A1 ist ein innerhalb eines feststehenden Getriebegehäuseteils mit Befestigungsflansch einstückig ausgestalteter zweiwangiger Planetenträger bekannt.

Aus JP S 58 - 13245 A ist ein zweiwangiger Planetenträger mit einem als Rohrstumpf ausgestalteten Planetenträgerflansch bekannt, wobei eine im regulären Betrieb elastisch verformbare flexible Platte mit dem Planetenträgerflansch und einer Ausgangswelle verbunden ist, um Lage- und Herstellungstoleranzen kompensieren zu können.

Aus US 2013/0035194 A1 ist ein Hubschraubergetriebe mit einem zweiwangigen Planetenträger bekannt, bei dem eine Wange des Planetenträger in Umfangsrichtung zwischen einander nachfolgenden Planetenrädern abgekröpft verläuft.

Aus US 2016/0146291 A1 ist ein bewegungsfest fixierter zweiwangiger Planetenträger bekannt, der eine im Wesentlichen kegelig bis zu einem Befestigungsflansch verlaufende Nabe aufweist.

Aus WO 2014/082781 A1 und DE 1 198 937 A1 ist jeweils ein Getriebe mit zwei jeweils eine Getriebestufen ausbildenden Planetengetriebe bekannt, bei dem zweiwangige Planetenträger der jeweiligen Getriebestufen einstückig ausgeführt sind, so dass die abtriebsseitige Wange des ersten Planetenträgers und die antriebsseitige Wange des zweiten Planetenträgers eine gemeinsame mittige Wange ausbilden.

Aus EP 2 105 290 A1 ist ein Planetengetriebe zur Drehzahlreduzierung zwischen einer elektrischen Maschine und einer Pressenwelle einer Umformpresse zum Umformen von Metall vorgesehen, wobei ein von einer Sonnenwelle kommendes Drehmoment an einen abtriebsseitig abstehenden Rohrstumpf eines im übrigen zweiwangigen Plantenträgers übertragen wird, wobei ein eine Ausgangsnabe aufweisender separat ausgeführter Presswellenanschlussflansch radial innerhalb des abstehenden Rohrstumpf befestigt ist.

Aus der DE 103 34 821 A1 sind die folgenden Merkmale bekannt: Planetenträger, aufweisend eine antriebsseitige Nabe, eine antriebsseitige äußere Wange, eine abtriebsseitige Wange, wobei die abtriebsseitige Wange mindestens einen abtriebsseitigen Achssitz jeweils für ein abtriebsseitiges Ende einer Planetenachse aufweist, mindestens einen die beiden besagten Wangen verbindenden Steg und eine antriebsseitige innere Wange, welche parallel zur antriebsseitigen äußeren Wange angeordnet ist und mindestens einen antriebsseitigen Achssitz jeweils für ein antriebsseitiges Ende einer Planetenachse aufweist.

Aufgabe der vorliegenden Erfindung ist es, einen verbesserten Planetenträger bereitzustellen.

Diese Aufgabe wird erfindungsgemäß durch einen Planetenträger mit den in Anspruch 1 angegebenen Merkmalen, einer Verwendung mit den in Anspruch 11 angegebenen Merkmalen, ein Planetengetriebe mit den in Anspruch 12 angegebenen Merkmalen, einer Verwendung mit den in Anspruch 14 angegebenen Merkmalen sowie einer Windkraftanlage mit den in Anspruch 15 angegebenen Merkmalen gelöst.

Der Planetenträger weist eine antriebsseitige Nabe, eine antriebsseitige äußere Wange, eine abtriebsseitige Wange und mindestens einen die beiden besagten Wangen verbindenden Steg auf. Entsprechend der Drehmomenteinleitung von einem Antrieb in den Planetenträger und der Drehmomentausleitung von dem Planetenträger zu einem Abtrieb werden die Bauteile des Planetenträgers wie Naben, Wangen und Achssitze der Planetenachse mit den Positionsbestimmungen "antriebsseitig" bzw. "abtriebsseitig" unterschieden. Die abtriebsseitige Wange weist mindestens einen abtriebsseitigen Achssitz jeweils für ein abtriebsseitiges Ende einer Planetenachse auf. Der Planetenträger weist außerdem eine antriebsseitige innere Wange auf, welche parallel zur antriebsseitigen äußeren Wange angeordnet ist und mindestens einen antriebsseitigen Achssitz jeweils für ein antriebsseitiges Ende einer Planetenachse aufweist. Eine Planetenachse kann in korrespondierende Achssitze, die jeweils in der antriebsseitigen inneren Wange und der abtriebsseitigen Wange angeordnet sind, eingesetzt werden.

Dabei ist die Unterscheidung zwischen "innerer" und "äußerer" Wange dadurch definiert, dass bei Betrachtung des Planetenträgers entlang der Rotationsachse R des Planetenträgers von der Antriebsseite her die antriebsseitige äußere Wange näher beim Betrachter liegt als die antriebsseitige innere Wange; somit ist die antriebsseitige äußere Wange in einem "äußeren" Bereich des Planetenträgers angeordnet, wohingegen relativ dazu die antriebsseitige innere Wange weiter in einem "inneren" Bereich des Planetenträgers angeordnet ist.

Die antriebsseitige innere Wange lagert über deren Planetenachssitze die antriebsseitigen Planetenachsenden, die antriebsseitige äußere Wange ist mit den Stegen verbunden. Die Stege sind außerdem verbunden mit der abtriebsseitigen Wange. In der abtriebsseitigen Wange befinden sich ebenfalls Sitze für die Planetenachsen.

Antriebsseitig hat der Planetenträger zwei Wangen, eine innere und eine äußere. Durch die Parallelität der antriebsseitigen äußeren und inneren Wange bietet der erfindungsgemäße Planetenträger die Möglichkeit, die Drehsteifigkeit des inneren Lastpfads, welcher von der antriebsseitigen Nabe zu dem antriebsseitigen Achssitz führt, auf die Drehsteifigkeit des äußeren Lastpfads, welcher von der abtriebsseitigen Nabe zu dem abtriebsseitigen Achssitz führt, so abzustimmen, dass sich unter Last eine definierte Relativverdrehung des antriebsseitigen Achssitzes zu dem abtriebsseitigen Achssitz einstellt. Bei einer optimalen Abstimmung verdrehen sich die beiden Achssitze um dasselbe Maß, so dass die Planetenachse unter Last keine Schiefstellung erfährt.

Durch die Erfindung wird ein Planetenträger bereitgestellt, der relativ leicht ist und dessen Wangen sich unter Last kaum oder gar nicht relativ zueinander verdrehen.

Der Erfindung liegt die Erkenntnis zugrunde, dass der Planetenträger aus strukturmechanischer Sicht eine Torsionsfeder, d.h. eine Drehfeder, ist: Dabei sind die Sitze der Planetenachsen in den beiden Wangen über eine Torsionsfeder miteinander verbunden. Eine unter Last auftretende Verdrehung der Planetenträger-Wangen und die daraus resultierende Planetenachsschiefstellung lässt sich somit nur über eine Variation der Torsionssteifigkeit dieser Torsionsfeder variieren.

Durch eine Parallelisierung des Lastpfads vom Bereich der Drehmomenteinleitung an der antriebsseitigen Nabe zu den Planetenachssitzen der antriebsseitigen und zur abtriebsseitigen Wange kann deren relative rotatorische Verlagerung unter Last über Variation der Steifigkeit des inneren und des äußeren Lastpfads gesteuert werden. Unter Lastpfad versteht man den Pfad, auf dem die Kräfte aufgrund einer äußeren Belastung von der Antriebsseite durch den Planetenträger zur Abtriebsseite geleitet werden.

Die Drehsteifigkeit des äußeren ("langen") Lastpfads wird primär über die Dicke und die Breite der Stege und der Größe der Durchbrüche für die Planetenräder, d.h. die Gestalt der Stege, die Stärke der Wangen und den Durchmesser der antriebsseitigen Nabe beeinflusst. Die Drehsteifigkeit des inneren ("kurzen") Lastpfads wird primär über den Durchmesser und die Dicke der antriebsseitigen inneren Wange und ihre konstruktive Verbindung mit dem Planetenträger beeinflusst.

Zwischen der Drehmomenteinleitung und der ersten Drehmomentableitungsstelle, d.h. den antriebseitigen Planetenachssitzen, ist der Lastpfad zur zweiten Drehmomentableitungsstelle, d.h. den abtriebsseitigen Planetenachssitzen, so parallelisiert, dass die Torsionssteifigkeiten der beiden Pfade getrennt voneinander variiert werden können.

Durch die Trennung des Kraftflusses wird zusätzlich die Kerbe zwischen Planetenachsbohrungen zur antriebsseitigen Nabe hin entschärft bzw. die Kerbstellen entfallen.

Vorteilhafte Ausgestaltungen und Weiterbildungen der Erfindung sind in den abhängigen Ansprüchen angegeben.

Gemäß einer bevorzugten Ausgestaltung der Erfindung ist die antriebsseitige innere Wange an der antriebsseitigen Nabe und/oder an der antriebsseitigen äußeren Wange und/oder an dem mindestens einen Steg befestigt.

Im Fall, dass die antriebsseitige innere Wange an der antriebsseitigen Nabe verbunden ist, sind beide antriebsseitigen Wangen mit der antriebsseitigen Nabe verbunden. Von Vorteil im Falle einer Befestigung an der antriebsseitigen Nabe ist dabei, dass ein relativ langer Lastpfad zur Abstimmung auf den Lastpfad des zweiten, abtriebsseitigen Achssitzes zur Verfügung steht. Von Vorteil im Falle einer Befestigung an der antriebsseitigen äußeren Wange ist dabei, dass bei Guss- oder Schweißbauteilen eine gute Zugänglichkeit zum Putzen der Übergänge erreicht wird. Von Vorteil im Falle einer Befestigung an dem mindestens einen Steg ist dabei, dass bei Guss- oder Schweißbauteilen eine gute Zugänglichkeit zum Putzen der Übergänge erreicht wird. Des Weiteren sind in diesem Fall geringere Wandstärken ausreichend.

Gemäß einer bevorzugten Ausgestaltung der Erfindung ist die Drehsteifigkeit des inneren Lastpfads, welcher von der antriebsseitigen Nabe zu dem antriebsseitigen Achssitz führt, auf die Drehsteifigkeit des äußeren Lastpfads, welcher von der abtriebsseitigen Nabe zu dem abtriebsseitigen Achssitz führt, so abgestimmt, dass sich unter Last eine definierte Relativverdrehung des antriebsseitigen Achssitzes zu dem abtriebsseitigen Achssitz einstellt. Von Vorteil ist dabei, dass sich bei einer optimalen Abstimmung die beiden Achssitze um dasselbe Maß verdrehen, so dass die Planetenachse unter Last keine oder nur eine relativ geringe Schiefstellung erfährt.

Der Planetenträger kann für Windkraftgetriebe eingesetzt werden. Das ist von Vorteil, da bei Windkraftanlagen sehr hohe Drehmomente von der Antriebsseite (Rotorseite) in den Planetenträger eingeleitet werden.

Gemäß einer bevorzugten Ausgestaltung der Erfindung besteht der Planetenträger aus mehreren Teilen. Es ist möglich, dass der Planetenträger durch Schweißverbindungen oder Schraubverbindungen aus mehreren Einzelteilen zusammengebaut ist. Von Vorteil bei einer Zusammenstellung aus mehreren Bauteilen ist dabei, dass die Herstellung der antriebsseitigen Wangen erleichtert wird.

Gemäß einer bevorzugten Ausgestaltung der Erfindung ist der Planetenträger aus mehreren Einzelteilen durch Schweißverbindungen zusammengebaut, wobei entlang zumindest einer Teillänge der Schweißverbindungen Entlastungskerben angeordnet sind.

Gemäß einer bevorzugten Ausgestaltung der Erfindung ist bzw. sind bei einem aus Einzelteilen zusammengeschweißten Planetenträger ein oder mehrere Einzelteil(e) einfache zylindrische oder scheibenförmige Elemente. Beispielsweise kann der Grundkörper des Planetenträgers, d.h. das die Stege aufweisende Element, aus einem Zentralrohr mit Ausbrüchen für die Planeten gebildet sein. Außerdem kann die Verbindung der antriebsseitigen Nabe mit dem Zentralrohr über eine Torsionsscheibe erfolgen. Alle Schweißnähte sind vorzugsweise durchgeschweißt und geschlossen. Vorzugsweise sind die Schweißnähte als Rundnähte ausgeführt, d.h. es sind keine Kerben in der Schweißnaht vorhanden. Dabei sind die Schweißnähte vorzugsweise so platziert, dass Sie in relativ niedrig beanspruchten Bereichen liegen.

Im Planetenträger können beliebig viele Planeten gelagert sein. Übliche Planetenräder weisen drei oder vier Planeten auf. Es können aber auch weniger als drei oder mehr als vier Planetenräder in den Planetenträger eingesetzt werden.

Alle Wangen können eine beliebige Geometrie haben, z.B. als Vollscheiben, Speichenräder oder gewölbte Scheiben ausgebildet sein. Die Wangen, insbesondere die antriebsseitige innere Wange, können Einschnürungen und/oder Durchbrüche zwischen den Achssitzen aufweisen, durch deren Designparameter wie Anzahl, Lage, Größe, Form, etc. die Torsionssteifigkeit der Wangen beeinflusst werden kann.

Der Planetenträger kann aus einem beliebigen Material sein, z.B. aus Gusseisen, Stahl oder Kunststoffe, insbesondere glasfaserverstärkte Kunststoffe (GFK oder CFK).

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu:
- Fig. 1: einen herkömmlichen zweiwangigen Planetenträger im Längsschnitt;
- Fig. 2: eine erste Ausgestaltung eines erfindungsgemäßen Planetenträgers mit beidseitiger Nabenlagerung im Längsschnitt;
- Fig. 3: den Planetenträger gemäß Fig. 2 mit Planetenrad, Planetenachse und Planetenradlager im Längsschnitt;
- Fig. 4: eine weitere Ausgestaltung eines erfindungsgemäßen Planetenträgers mit beidseitiger Nabenlagerung im Längsschnitt;
- Fig. 5: eine weitere Ausgestaltung eines erfindungsgemäßen Planetenträgers mit beidseitiger Nabenlagerung im Längsschnitt;
- Fig. 6: eine weitere Ausgestaltung eines erfindungsgemäßen Planetenträgers mit einseitiger Lagerung im Längsschnitt;
- Fig. 7: eine weitere Ausgestaltung eines erfindungsgemäßen Planetenträgers mit einseitiger Lagerung im Längsschnitt;
- Fig. 8: eine perspektivische Ansicht eines Ausschnitts eines Planetenträgers ähnlich dem in Fig. 2;
- Fig. 9: eine weitere Ausgestaltung eines nicht erfindungsgemäßen Planetenträgers mit beidseitiger Nabenlagerung im Längsschnitt;
- Fig. 10: eine vergrößerte Darstellung eines Details von Fig. 9;
- Fig. 11: eine vergrößerte Darstellung eines Details von Fig. 9;
- Fig. 12: eine vergrößerte Darstellung eines Details von Fig. 9;
- Fig. 13: eine weitere Ausgestaltung eines nicht erfindungsgemäßen Planetenträgers mit beidseitiger Nabenlagerung im Längsschnitt;
- Fig. 14: eine weitere Ausgestaltung eines nicht erfindungsgemäßen Planetenträgers mit beidseitiger Nabenlagerung im Längsschnitt;
- Fig. 15: eine Seitenansicht eines erfindungsgemäßen Planetenträgers;
- Fig. 16: die Draufsicht auf den Schnitt XV-XV aus Fig. 15; und
- Fig. 17 bis 19: mögliche Ausgestaltungen der Wangen.

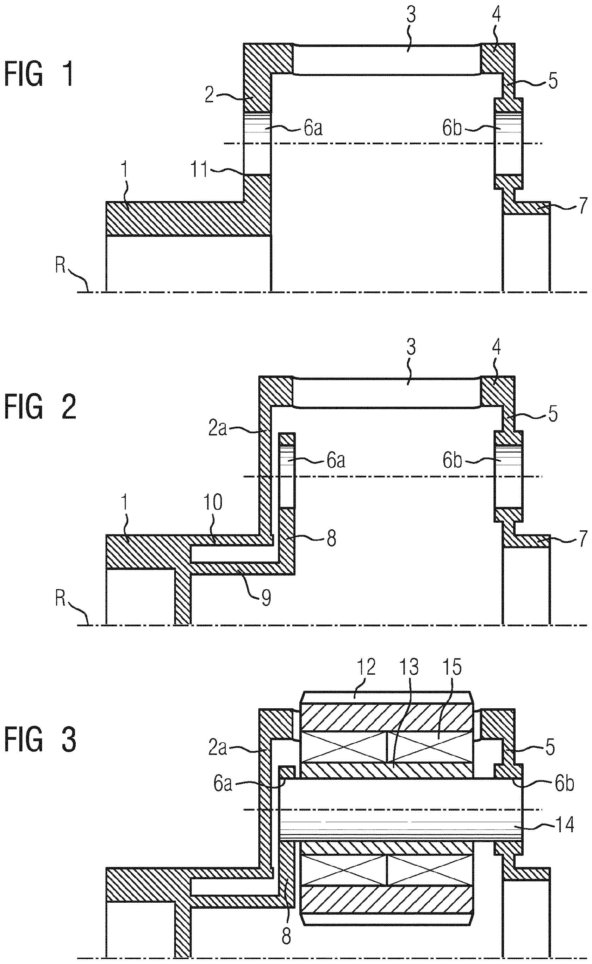

Fig. 1 zeigt einen herkömmlichen zweiwangigen Planetenträger. Eine antriebsseitige Nabe 1, die als ein axial verlaufender Rohrstumpf ausgebildet ist, ist mit einer antriebsseitigen Wange 2 verbunden, die als eine radial verlaufende Scheibe ausgebildet ist. Die antriebsseitige Nabe 1 wird auch als lange Nabe bezeichnet. Am äußeren Durchmesser der antriebsseitigen Wange 2 sind Stege 4 angeordnet, die als ein axial verlaufendes, mit Durchbrüchen 3 versehenes Rohr ausgebildet sind. Die Stege 4 verbinden die antriebsseitige Wange 2 mit einer abtriebsseitigen Wange 5, die ebenfalls als eine radial verlaufende Scheibe ausgebildet ist. Am Innendurchmesser der abtriebsseitigen Wange 5 ist eine abtriebsseitige Nabe 7 angeordnet, die als ein axial verlaufender Rohrstumpf ausgebildet ist. Die abtriebsseitige Nabe 7 wird auch als kurze Nabe bezeichnet. Der Planetenträger wird in einem Getriebegehäuse um seine Rotationsachse R drehbar gelagert, indem die beiden Naben 1, 7 mittels Lager, seien es Wälz- oder Gleitlager, gegenüber dem Getriebegehäuse abgestützt wird.

In die beiden Wangen 2, 5 sind jeweils axial fluchtende Bohrungen 6a, 6b eingebracht, welche Sitze für Planetenachsen bilden, auf denen Planetenräder drehbar gelagert werden. Dabei wird ein antriebsseitiges Ende einer Planetenachse in einen antriebsseitigen Achssitz 6a in der antriebsseitigen Wange 2 und ein abtriebsseitiges Ende einer Planetenachse in einen abtriebsseitigen Achssitz 6b in der abtriebsseitigen Wange 5 eingesetzt. An der Position, an welcher der antriebsseitige Achssitz 6a in der antriebsseitigen Wange 2 angeordnet ist, ist eine Kerbe 11 gebildet, an welcher Spannungsspitzen entstehen.

Die Stege 4 erstrecken sich zwischen den beiden Wangen 2, 5 und zwischen den Durchbrüchen 3, durch welche die Zähne der Planetenräder ragen, um mit einem den Planetenträger umgebenden Hohlrad zu kämmen. Im axialen Zentrum des Planetenträgers wird ein Sonnenrad angeordnet, welches ebenfalls mit den Planetenrädern kämmt.

Der Planetenträger kann in einem Planetengetriebe so angeordnet sein, dass ein Drehmoment eines Antriebs, beispielsweise einer Rotorwelle einer Windkraftanlage, auf die antriebsseitige Nabe 1 gebracht wird. Dabei kämmen die Planetenräder mit dem Hohlrad und dem zentral angeordneten Sonnenrad in einer Weise, dass bei einem feststehenden Hohlrad eine Drehung der antriebsseitigen Nabe 1 zu einer schnelleren Drehung des zentralen Sonnenrads führt. Die Drehung der Sonnenradachse, auf welcher das Sonnenrad drehfest angeordnet ist, wird als Abtrieb ggf. auf eine dem Planetenträger nachgeschaltete weitere Getriebestufe und dann schließlich auf eine dem Getriebe nachgeschaltete Maschine, z.B. einen Generator übertragen.

Entsprechend der Seite der Drehmomenteinleitung von einem Antrieb, in der in Fig. 1 gezeigten Darstellung auf der linken Seite, und der Seite der Drehmomentausleitung zu einem Abtrieb, in der in Fig. 1 gezeigten Darstellung auf der rechten Seite, werden die Bauteile des Planetenträgers wie die beiden Naben 1, 7, die beiden Wangen 2, 5 und die beiden Achssitze 6a, 6b mit den Positionsbestimmungen "abtriebsseitig" bzw. "abtriebsseitig" unterschieden.

Fig. 2 zeigt eine erste Ausgestaltung eines erfindungsgemäßen Planetenträgers. Der Aufbau des erfindungsgemäßen Planetenträgers entspricht weitgehend dem des herkömmlichen Planetenträger gemäß Fig. 1, bis auf die antriebsseitige Wange, welche erfindungsgemäß durch zwei parallel angeordnete antriebsseitige Wangen 2a, 8 ersetzt ist. Dabei unterscheidet man eine antriebsseitige innere Wange 8 und eine antriebsseitige äußere Wange 2a. Dabei ist die Unterscheidung zwischen "innerer" und "äußerer" Wange dadurch definiert, dass bei Betrachtung des Planetenträgers entlang der Rotationsachse R des Planetenträgers von der Antriebsseite her, d.h. in der Darstellung von Fig. 2 von links, die antriebsseitige äußere Wange 2a näher beim Betrachter liegt als die antriebsseitige innere Wange 8; somit ist die antriebsseitige äußere Wange 2a im "äußeren" Bereich des Planetenträgers angeordnet, wohingegen relativ dazu die antriebsseitige innere Wange 8 weiter im "Inneren" des Planetenträgers angeordnet ist.

Die antriebsseitige innere Wange 8 ist über eine antriebsseitige innere Nabe 9 an der antriebsseitigen Nabe 1 befestigt. Die antriebsseitige äußere Wange 2a ist über eine antriebsseitige äußere Nabe 10 an der antriebsseitigen Nabe 1 befestigt. Die antriebsseitige innere Nabe 9 ist dabei ein axial verlaufender Rohrstumpf, welcher näher an der Rotationsachse R angeordnet ist als der axial verlaufende Rohrstumpf, welcher die antriebsseitige äußere Nabe 10 bildet. Der antriebsseitige Achssitz 6a ist dabei ausschließlich in der antriebsseitigen inneren Wange 8 angeordnet.

Durch Parallelisierung des Lastpfads vom Bereich der Drehmomenteinleitung an der antriebsseitigen Nabe 1 zu den Achssitzen 6a der Planeten in der antriebsseitigen inneren Wange 8 und zu den Achssitzen 6b der Planeten in der abtriebsseitigen Wange 5 kann deren relative rotatorische Verlagerung unter Last über Variation der Steifigkeit des inneren Lastpfads, siehe Bezugszeichen 1 über 9, 8 zu 6a in Fig. 2, und des äu-βeren Lastpfads, siehe Bezugszeichen 1 über 10, 2a, 3, 4, 5 zu 6b in Fig. 2, gesteuert werden. Durch die Trennung des Kraftflusses wird zusätzlich die Kerbe 11 zwischen den Achssitzen 6a zur antriebsseitigen Nabe 1 hin entschärft, bzw. die Kerbstelle 11 entfällt.

Die Drehsteifigkeit des äußeren ("langen") Lastpfads wird primär über die Dicke und die Breite der Stege 4 und der Grö-βe der Durchbrüche 3 für die Planetenräder, d.h. die Gestalt der Stege 4, die Wandstärke der äußeren Wange 2a, sowie die Dicke und die Länge der antriebsseitigen äußeren Nabe 10 beeinflusst. Die Drehsteifigkeit des inneren ("kurzen") Lastpfads wird primär über den Durchmesser und die Dicke der antriebsseitigen inneren Nabe 9 beeinflusst.

Dabei ist die Drehsteifigkeit des inneren Lastpfads, welcher von der antriebsseitigen Nabe 1 zu dem antriebsseitigen Achssitz 6a führt, auf die Torsionssteifigkeit des äußeren Lastpfads, welcher von der antriebsseitigen Nabe 1 zu dem abtriebsseitigen Achssitz 6b führt, so abgestimmt ist, dass sich unter Last eine definierte Relativverdrehung des antriebsseitigen Achssitzes 6a zu dem abtriebsseitigen Achssitz 6b einstellt.

Fig. 3 zeigt den Planetenträger gemäß Fig. 2 mit einem Planetenrad 12, einer Planetenachse 14, einem Lagerinnenring 13 und einem Planetenlager 15. Dabei sitzt das antriebsseitige Ende der Planetenachse 14 in dem antriebsseitigen Achssitz 6a, welcher in der antriebsseitigen inneren Wange 8 angeordnet ist, während das abtriebsseitige Ende der Planetenachse 14 in dem abtriebsseitigen Achssitz 6b sitzt, welcher wie beim herkömmlichen Planetenträger gemäß Fig. 1 in der abtriebsseitigen Wange 5 angeordnet ist.

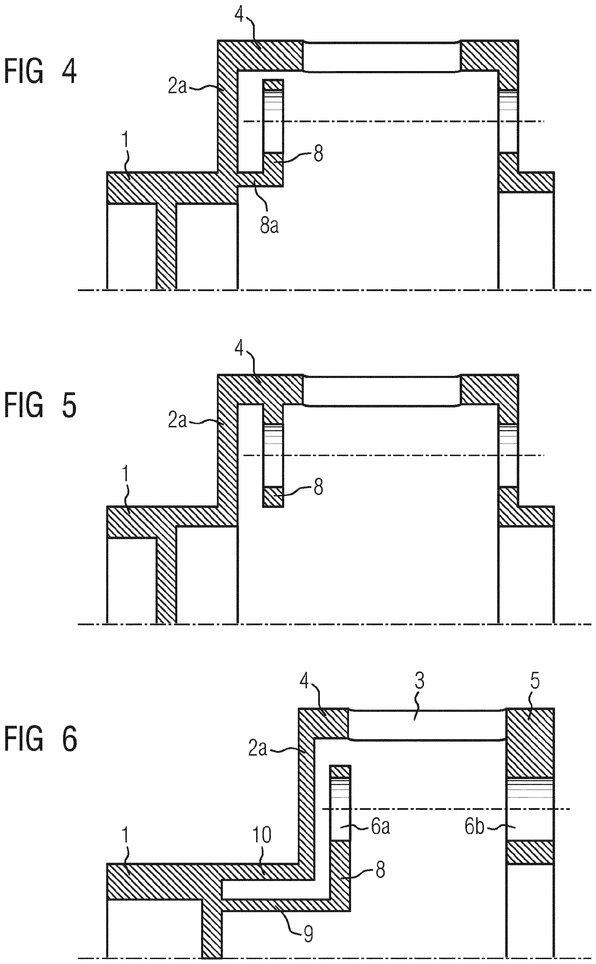

Fig. 4 zeigt eine weitere Ausgestaltung eines erfindungsgemäßen Planetenträgers mit beidseitiger Nabenlagerung. Dabei ist gegenüber der in Fig. 2 gezeigten Ausgestaltung die antriebsseitige innere Wange 8 nicht über eine innere Nabe 9 an der antriebsseitigen Nabe 1, sondern über einen axialen Rohrstummel 8a an der antriebsseitigen, äußeren Wange 2a befestigt.

Fig. 5 zeigt eine weitere Ausgestaltung eines erfindungsgemäßen Planetenträgers mit beidseitiger Nabenlagerung. Dabei ist gegenüber der in Fig. 2 gezeigten Ausgestaltung die antriebsseitige innere Wange 8 nicht über eine innere Nabe 9 an der antriebsseitigen Nabe 1, sondern an dem Steg 4 befestigt, genauer: an der antriebsseitigen Hälfte des Stegs 4.

Fig. 6 zeigt eine weitere Ausgestaltung eines erfindungsgemä-βen Planetenträgers. Der Aufbau des Planetenträgers entspricht weitgehend dem des erfindungsgemäßen Planetenträgers gemäß Fig. 2, allerdings fehlt dem Planetenträger gemäß Fig. 6 die abtriebsseitige Lagerung in einer abtriebsseitigen Nabe. Stattdessen ist der Planetenträger gemäß Fig. 6 an der antriebsseitigen Nabe 1 einseitig, d.h. fliegend gelagert.

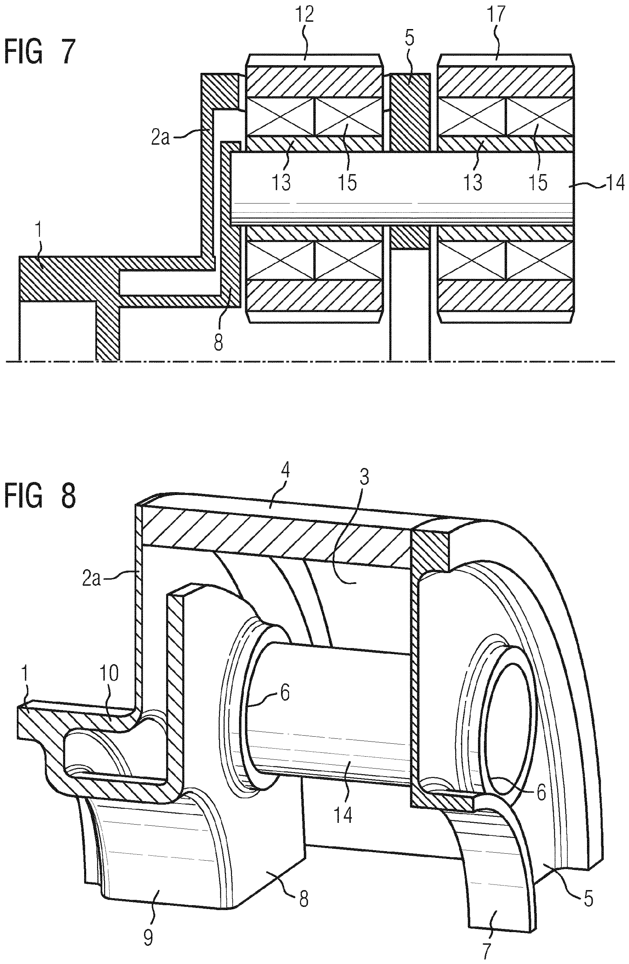

Fig. 7 zeigt eine weitere Ausgestaltung eines erfindungsgemäßen Planetenträgers mit einseitiger Lagerung. Dabei ragt die Planetenachse abtriebsseitig so weit über die abtriebsseitige Wange 5 hinaus, dass ein fliegend zwischen Hohlrad und Sonnenrad eingespannter Planetenrad 17 auf der Planetenachse 14 Platz findet. Daneben ist ein zwischen den antriebsseitigen Wangen 2a, 8 und der abtriebsseitigen Wange 5 eingeschobenes Planetenrad 12 auf der Planetenachse 14 gelagert.

Fig. 8 zeigt zur besseren Veranschaulichung der Erfindung eine perspektivische Ansicht eines Ausschnitts eines erfindungsgemäßen Planetenträgers, der dem in Fig. 2 dargestellten Planetenträger ähnelt, wobei die Planetenachse 14 ebenfalls eingezeichnet ist.

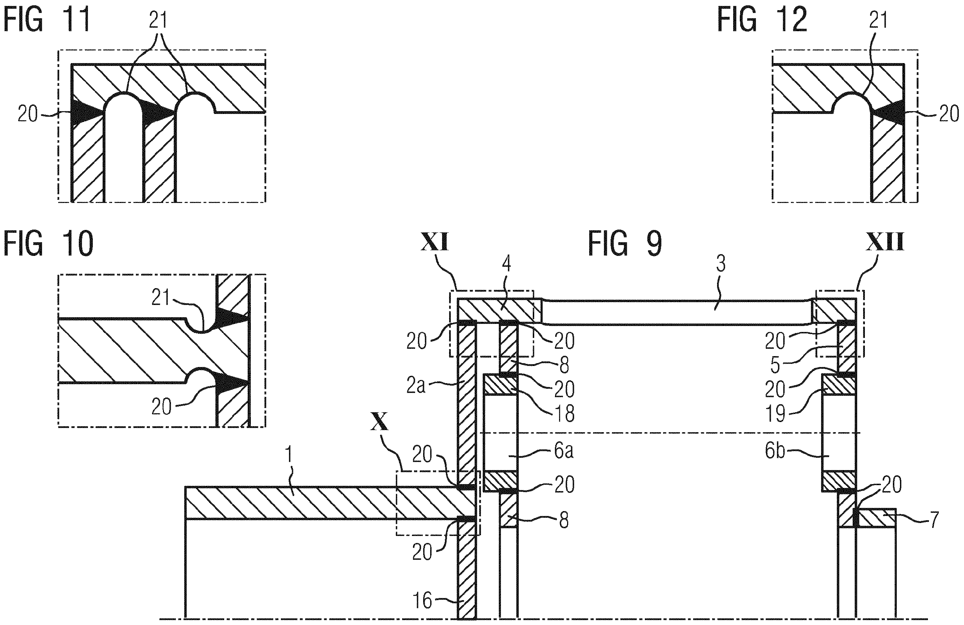

Fig. 9 zeigt einen Planetenträger, welcher ein Rohr mit für die nicht dargestellten Planeten vorgesehenen Durchbrüchen 3 als Steg 4, zwei Wangen 5, 8, eine Torsionsscheibe als äußere Wange 2a, eine Nabe 1, an welcher das Drehmoment anliegt, Verstärkungsringe 18, 19 zur Aufnahme der Planetenachsbolzen, eine optionale Nabe 7 zur Aufnahme eines möglichen Steglagers sowie eine optionale Verschlussscheibe 16 aufweist. Fig. 9 zeigt auch die Anordnung der Schweißnähte 20 zwischen den einzelnen Bauteilen. Alle Schweißnähte 20 sind durchgeschweißt und geschlossen.

Fig. 10 bis 12 zeigen vergrößerte Details X, XI und XII des in Fig. 9 dargestellten Planetenträgers, wobei neben den Schweißnähten 20 jeweils eine Entlastungskerbe 21 angeordnet ist.

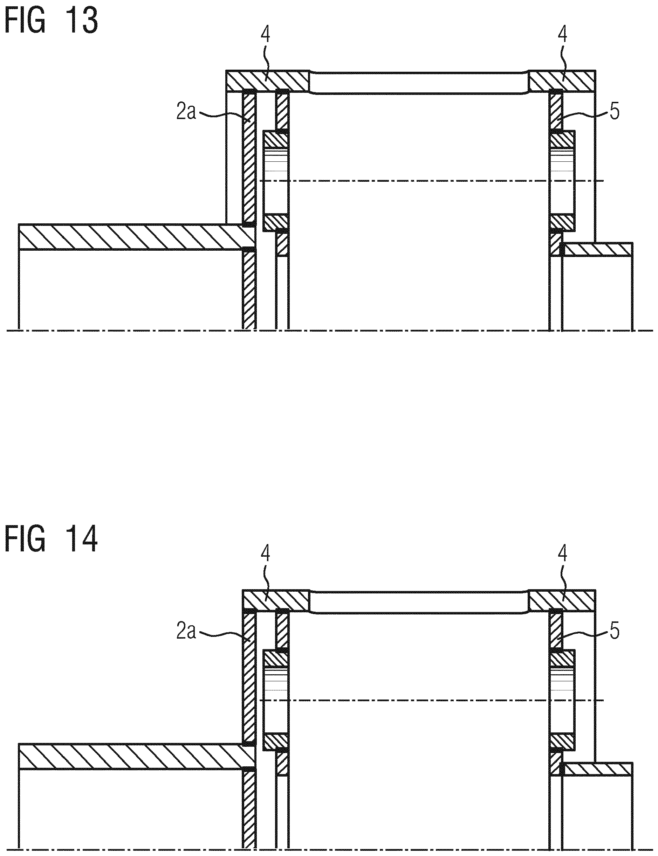

Fig. 13 zeigt einen Planetenträger mit einem die Stege 4 bildendem Rohr, welches an beiden Stirnseiten des Planetenträgers über die als Torsionsscheibe wirkende antriebsseitige äußere Wange 2a und die abtriebsseitige Wange 5 hinausragt.

Fig. 14 zeigt einen Planetenträger mit einem die Stege 4 bildendem Rohr, welches über die als Torsionsscheibe wirkende antriebsseitige äußere Wange 2a hinausragt. Je länger das die Stege 4 bildende Rohr ist, d.h. je größer der Überstand ist, desto höher ist seine Torsionssteifigkeit.

Die Fügereihenfolge (Schweißreihenfolge) ist vorzugsweise in der Reihenfolge der folgenden Schritte von a) bis g):
a) Antriebsseitige innere Wange 8 mit Verstärkungsring 18 zu Baugruppe 1.
b) Abtriebsseitige Wange 5 mit Verstärkungsring 19 und abtriebsseitiger Nabe 7 zur Baugruppe 2.
c)Antriebsseitige äußere Wange 2a mit antriebsseitiger Nabe 1 und optional Verschlussscheibe 16 zu Baugruppe 3.
d) Heften von Steg 4 mit Baugruppe 1 zu Baugruppe 4.
e) Heften von Baugruppe 4 mit Baugruppe 2 zu Baugruppe 5.
f) Verschweißen der Baugruppe 5.
g) Heften und Verschweißen von Baugruppen 3 und 5 zum fertigen Planetenträger.

Die Torsionssteifigkeit des Planetenträgers beeinflusst maßgeblich das Breitentragverhalten der Verzahnung. Dadurch, dass die die antriebsseitige Achssitze 6a aufweisende antriebsseitige innere Wange 8 von der Drehmoment einleitenden Nabe 1 getrennt ist, kann die Form der antriebsseitigen inneren Wange 8 so variiert werden, dass die Torsionsverformung des Stegs 4, welche zu einer rotatorischen Verlagerung der abtriebsseitigen Wange 5 und somit auch des abtriebsseitigen Achssitzes 6b führt, kompensiert werden kann.

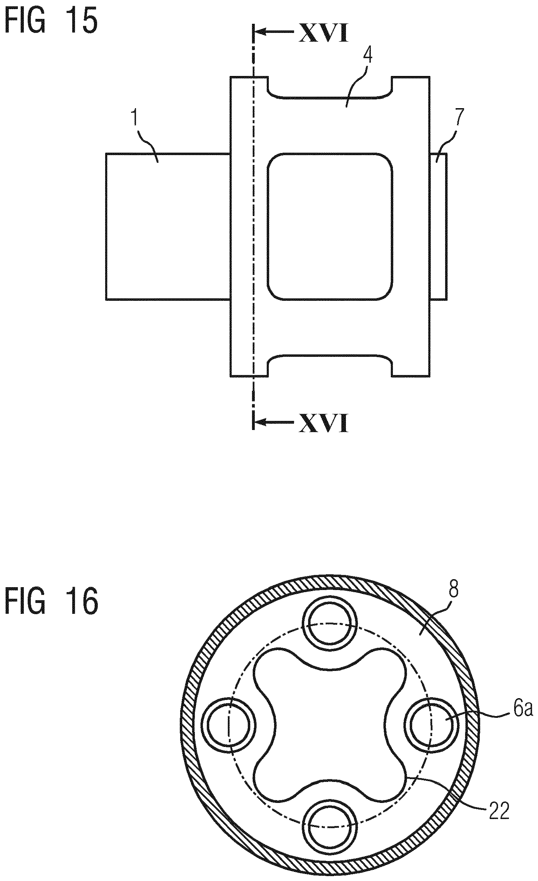

Fig. 15 zeigt eine Seitenansicht eines erfindungsgemäßen Planetenträgers mit einer antriebsseitigen Nabe 1, einer abtriebsseitigen Nabe 7 und einem dazwischen angeordneten Steg 4. Dabei ist der in Fig. 15 angegebene Schnitt XVI-XVI in Fig. 16 gezeigt.

Fig. 16 zeigt eine Draufsicht auf die antriebsseitige innere Wange 8 an dem in Fig. 15 angegebenen Schnitt XVI-XVI. Die Wange 8 weist Einschnürungen 22 zwischen den Achssitzen 6a auf, wobei durch die Tiefe der Einschnürungen 22 die Steifigkeit der antriebsseitigen inneren Wange 8 variiert werden kann.

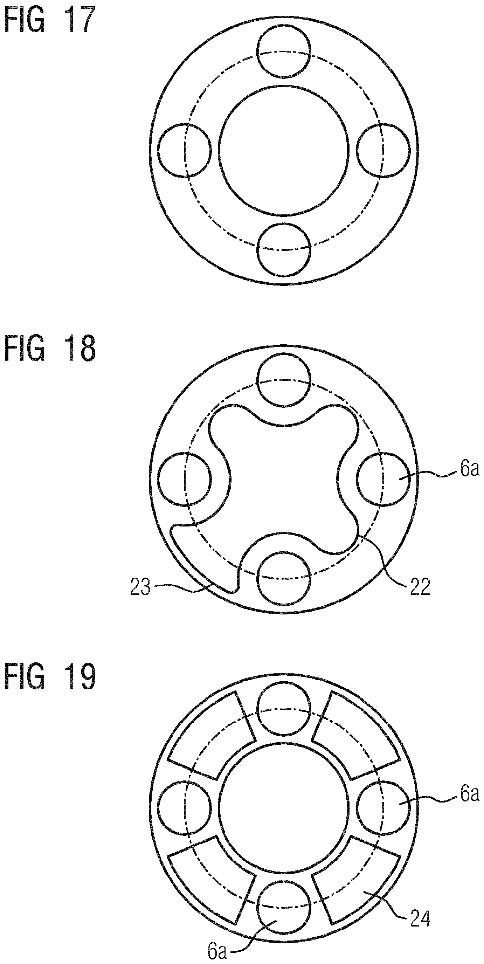

Fig. 17 bis 19 zeigen mögliche Ausführungen der Wangen 5, 8. Fig. 17 zeigt eine Vollscheibe mit einer maximalen Steifigkeit, wie sie vorzugsweise für die abtriebsseitige Wange 5 genutzt werden kann. Fig. 18 zeigt Einschnürungen 22, 23 zwischen den Achssitzen 6a, wobei durch eine unterschiedliche Tiefe der Einschnürungen 22, 23 die Steifigkeit der antriebsseitigen inneren Wange 8 variiert werden kann. Fig. 19 zeigt eine mögliche Ausgestaltung, wie die Steifigkeitsvariation der antriebsseitigen inneren Wange 8 durch Ausbrüche 24 zwischen den Achssitzen 6a erfolgen kann.

## Patentansprüche

1. Planetenträger, aufweisend
eine antriebsseitige Nabe (1),
eine antriebsseitige äußere Wange (2a),
eine abtriebsseitige Wange (5), wobei die abtriebsseitige Wange (5) mindestens einen abtriebsseitigen Achssitz (6b) jeweils für ein abtriebsseitiges Ende einer Planetenachse (14) aufweist,
mindestens einen die beiden besagten Wangen (2a, 5) verbindenden Steg (4) und
eine antriebsseitige innere Wange (8), welche parallel zur antriebsseitigen äußeren Wange (2a) angeordnet ist und mindestens einen antriebsseitigen Achssitz (6a) jeweils für ein antriebsseitiges Ende einer Planetenachse (14) aufweist, wobei der antriebsseitige Achssitz (6a) ausschließlich in der antriebsseitigen inneren Wange (8) angeordnet ist,
wobei die Nabe (1), die antriebsseitige äußere Wange (2a) und die antriebsseitige innere Wange (8) einteilig ausgestaltet sind.

2. Planetenträger nach Anspruch 1, wobei der Planetenträger aus Gusseisen, Stahl, oder Kunststoff hergestellt ist.

3. Planetenträger nach Anspruch 1 oder 2, wobei in der antriebsseitigen inneren Wange (8) und in der abtriebsseitigen Wange (5) jeweils axial fluchtende Bohrungen eingebracht sind, welche die Achssitze (6a, 6b) für die Planetenachsen (14) bilden, auf denen Planetenräder (12) drehbar gelagert sind, wobei ein antriebsseitiges Ende der Planetenachse (14) in dem antriebsseitigen Achssitz (6a) in der antriebsseitigen Wange (2) und ein abtriebsseitiges Ende einer Planetenachse (14) in dem abtriebsseitigen Achssitz (6b) in der abtriebsseitigen Wange (5) eingesetzt ist.

4. Planetenträger nach Anspruch 3, wobei ein zwischen den antriebsseitigen Wangen (2a, 8) einerseits und der abtriebsseitigen Wange (5) andererseits eingeschobenes Planetenrad (12) auf der Planetenachse 14 gelagert ist.

5. Planetenträger nach einem der vorhergehenden Ansprüche, wobei die antriebsseitige innere Wange (8) an der antriebsseitigen Nabe (1) und/oder an der antriebsseitigen äußeren Wange (2a) und/oder an dem mindestens einen Steg (4) befestigt ist.

6. Planetenträger nach einem der Ansprüche 1 bis 4, wobei die antriebsseitige innere Wange (8) ausschließlich an einer antriebsseitigen Hälfte des Stegs (4) befestigt ist.

7. Planetenträger nach einem der Ansprüche 1 bis 4, wobei die antriebsseitige innere Wange (8) über eine antriebsseitige innere Nabe (9) an der antriebsseitigen Nabe (1) befestigt ist, wobei die antriebsseitige äußere Wange (2a) über eine antriebsseitige äußere Nabe (10) an der antriebsseitigen Nabe (1) befestigt ist und die antriebsseitige innere Nabe (9) ein axial verlaufender Rohrstumpf ist, welcher näher an der Rotationsachse (R) angeordnet ist als der axial verlaufende Rohrstumpf, welcher die antriebsseitige äußere Nabe (10) bildet.

8. Planetenträger nach einem der vorhergehenden Ansprüche, wobei die Drehsteifigkeit des inneren Lastpfads, welcher von der antriebsseitigen Nabe (1) zu dem antriebsseitigen Achssitz (6a) führt, auf die Drehsteifigkeit des äußeren Lastpfads, welcher von der abtriebsseitigen Nabe (1) zu dem abtriebsseitigen Achssitz (6b) führt, so abgestimmt ist, dass sich unter Last eine definierte Relativverdrehung des antriebsseitigen Achssitzes (6a) zu dem abtriebsseitigen Achssitz (6b) einstellt.

9. Planetenträger nach einem der vorhergehenden Ansprüche, wobei die antriebsseitige Nabe (1), die als ein axial verlaufender Rohrstumpf ausgebildet ist, mit der antriebsseitigen Wange (2a), die als eine radial verlaufende Scheibe ausgebildet ist, verbunden ist.

10. Planetenträger nach einem der vorhergehenden Ansprüche, wobei an einem Innendurchmesser der abtriebsseitigen Wange (5) eine abtriebsseitige Nabe (7), die als ein axial verlaufender Rohrstumpf ausgebildet ist, angeordnet ist.

11. Verwendung eines Planetenträgers nach einem der vorhergehenden Ansprüche, wobei eine Drehmomenteinleitung an der antriebsseitigen Nabe erfolgt.

12. Planetengetriebe mit einem Planetenträger nach einem der Ansprüche 1 bis 10, wobei ein Drehmoment eines Antriebs auf die antriebsseitige Nabe (1) derart aufbringbar ist, dass bei einem feststehenden Hohlrad eine Drehung der antriebsseitigen Nabe (1) zu einer schnelleren Drehung eines zentralen Sonnenrads führt.

13. Planetengetriebe nach Anspruch 12, wobei eine Drehung einer Sonnenradachse, auf welcher das Sonnenrad drehfest angeordnet ist, als Antrieb für eine dem Planetenträger nachgeschaltete weitere Getriebestufe und dann schließlich auf eine der Getriebestufe nachgeschaltete Maschine übertragbar ist.

14. Verwendung eines Planetengetriebes nach Anspruch 12 oder 13, wobei eine Drehmomenteinleitung an der antriebsseitigen Nabe erfolgt.

15. Windkraftanlage mit einem Windkraftgetriebe, in dem ein Planetenträger nach einem der Ansprüche 1 bis 10 eingesetzt ist, wobei Drehmomente an der Antriebsseite in den Planetenträger einleitbar sind.

## Claims

1. Planet carrier, having
a drive-side hub (1),
a drive-side outer cheek (2a),
an output-side cheek (5), wherein the output-side cheek (5) has at least one respective output-side axle seat (6b) for an output-side end of a planet axle (14),
at least one web (4) connecting the two aforesaid cheeks (2a, 5) and
a drive-side inner cheek (8), which is arranged parallel to the drive-side outer cheek (2a) and has at least one respective drive-side axle seat (6a) for a drive-side end of a planet axle (14), wherein the drive-side axle seat (6a) is arranged only in the drive-side inner cheek (8), wherein the hub (1), the drive-side outer cheek (2a) and the drive-side inner cheek (8) are configured in one piece.

2. Planet carrier according to Claim 1, wherein the planet carrier is made of cast iron, steel, or plastic.

3. Planet carrier according to Claim 1 or 2, wherein axially aligned holes are respectively introduced into the drive-side inner cheek (8) and into the output-side cheek (5) and form the axle seats (6a, 6b) for the planet axles (14) on which planet wheels (12) are rotatably mounted, wherein a drive-side end of the planet axle (14) is inserted into the drive-side axle seat (6a) in the drive-side cheek (2), and an output-side end of a planet axle (14) is inserted into the output-side axle seat (6b) in the output-drive cheek (5).

4. Planet carrier according to Claim 3, wherein a planet wheel (12) inserted in between the drive-side cheeks (2a, 8) on the one hand and the output-side cheek (5) on the other hand is mounted on the planet axle (14).

5. Planet carrier according to one of the preceding claims, wherein the drive-side inner cheek (8) is fixed to the drive-side hub (1) and/or to the drive-side outer cheek (2a) and/or to the at least one web (4).

6. Planet carrier according to one of Claims 1 to 4, wherein the drive-side inner cheek (8) is fixed only to a drive-side half of the web (4).

7. Planet carrier according to one of Claims 1 to 4, wherein the drive-side inner cheek (8) is fixed to the drive-side hub (1) via a drive-side inner hub (9), wherein the drive-side outer cheek (2a) is fixed to the drive-side hub (1) via a drive-side outer hub (10), and the drive-side inner hub (9) is an axially extending tubular stub, which is arranged closer to the axis of rotation (R) than the axially extending tubular stub which forms the drive-side outer hub (10).

8. Planet carrier according to one of the preceding claims, wherein the torsional rigidity of the inner load path which leads from the drive-side hub (1) to the drive-side axle seat (6a) is matched to the torsional rigidity of the outer load path which leads from the output-side hub (1) to the output-side axle seat (6b), so that, under load, a defined rotation of the drive-side axle seat (6a) relative to the output-side axle seat (6b) is established.

9. Planet carrier according to one of the preceding claims, wherein the drive-side hub (1), which is formed as an axially extending tubular stub, is connected to the drive-side cheek (2a), which is formed as a disc extending radially.

10. Planet carrier according to one of the preceding claims, wherein an output-side hub (7), which is formed as an axially extending tubular stub, is arranged on an internal diameter of the output-side cheek (5).

11. Use of a planet carrier according to one of the preceding claims, wherein torque is introduced to the drive-side hub.

12. Planetary gearbox having a planet carrier according to one of Claims 1 to 10, wherein a torque from a drive can be applied to the drive-side hub (1) in such a way that when an internal gear is stationary, rotation of the drive-side hub (1) leads to faster rotation of a central sun wheel.

13. Planetary gearbox according to Claim 12, wherein a rotation of a sun wheel axle on which the sun wheel is co-rotationally arranged can be transferred as a drive for a further gear stage connected downstream of the planet carrier and then finally to a machine connected downstream of the gear stage.

14. Use of a planetary gearbox according to Claim 12 or 13, wherein torque is introduced to the drive-side hub.

15. Wind turbine having a wind turbine gearbox into which a planet carrier according to one of Claims 1 to 10 is inserted, wherein torques can be introduced into the planet carrier on the drive side.

## Revendications

1. Porte-satellites, présentant
un moyeu côté entraînement (1),
une joue extérieure côté entraînement (2a),
une joue côté sortie (5), la joue côté sortie (5) présentant au moins un siège d'axe côté sortie (6b) respectivement pour une extrémité côté sortie d'un axe de satellite (14),
au moins une entretoise (4) reliant les deux dites joues (2a, 5) et
une joue intérieure côté entraînement (8), qui est agencée parallèlement à la joue extérieure côté entraînement (2a) et qui présente au moins un siège d'axe côté entraînement (6a) respectivement pour une extrémité côté entraînement d'un axe de satellite (14), le siège d'axe côté entraînement (6a) étant agencé exclusivement dans la joue intérieure côté entraînement (8),
le moyeu (1), la joue extérieure côté entraînement (2a) et la joue intérieure côté entraînement (8) étant conçus en une seule pièce.

2. Porte-satellites selon la revendication 1, le porte-satellites étant fabriqué en fonte, en acier ou en matière plastique.

3. Porte-satellites selon la revendication 1 ou 2, dans la joue intérieure côté entraînement (8) et dans la joue côté sortie (5) étant pratiqués respectivement des alésages alignés axialement, qui forment les sièges d'axe (6a, 6b) pour les axes de satellite (14), sur lesquels les satellites (12) sont montés de manière rotative, une extrémité côté entraînement de l'axe de satellite (14) étant insérée dans le siège d'axe côté entraînement (6a) dans la joue côté entraînement (2) et une extrémité côté sortie d'un axe de satellite (14) étant insérée dans le siège d'axe côté sortie (6b) dans la joue côté sortie (5) .

4. Porte-satellites selon la revendication 3, un satellite (12) enfilé entre les joues côté entraînement (2a, 8) d'une part et la joue côté sortie (5) d'autre part étant monté sur l'axe de satellite 14.

5. Porte-satellites selon l'une quelconque des revendications précédentes, la joue intérieure côté entraînement (8) étant fixée au moyeu côté entraînement (1) et/ou à la joue extérieure côté entraînement (2a) et/ou à l'au moins une entretoise (4).

6. Porte-satellites selon l'une quelconque des revendications 1 à 4, la joue intérieure côté entraînement (8) étant fixée exclusivement à une moitié côté entraînement de l'entretoise (4).

7. Porte-satellites selon l'une quelconque des revendications 1 à 4, la joue intérieure côté entraînement (8) étant fixée au moyeu côté entraînement (1) par l'intermédiaire d'un moyeu intérieur côté entraînement (9), le moyeu extérieur côté entraînement (2a) étant fixé au moyeu côté entraînement (1) par l'intermédiaire d'un moyeu extérieur côté entraînement (10), et le moyeu intérieur côté entraînement (9) étant un tube tronqué s'étendant axialement qui est agencé plus près de l'axe de rotation (R) que le tube tronqué s'étendant axialement qui forme le moyeu extérieur côté entraînement (10).

8. Porte-satellites selon l'une quelconque des revendications précédentes, la rigidité en rotation du chemin de charge intérieur allant du moyeu côté entraînement (1) au siège d'axe côté entraînement (6a) étant accordée à la rigidité en rotation du chemin de charge extérieur allant du moyeu (1) côté sortie au siège d'axe côté sortie (6b) de telle sorte que, sous charge, une rotation relative définie du siège d'axe côté entraînement (6a) par rapport au siège d'axe côté sortie (6b) s'établit.

9. Porte-satellites selon l'une quelconque des revendications précédentes, le moyeu côté entraînement (1), qui est réalisé sous la forme d'un tube tronqué s'étendant axialement, étant relié à la joue côté entraînement (2a), qui est réalisée sous la forme d'un disque s'étendant radialement.

10. Porte-satellites selon l'une quelconque des revendications précédentes, un moyeu côté sortie (7), qui est réalisé sous la forme d'un tube tronqué s'étendant axialement, étant agencé sur un diamètre intérieur de la joue côté sortie (5).

11. Utilisation d'un porte-satellites selon l'une quelconque des revendications précédentes, une introduction de couple étant effectuée sur le moyeu côté entraînement.

12. Engrenage planétaire avec un porte-satellites selon l'une quelconque des revendications 1 à 10, un couple d'un entraînement pouvant être appliqué au moyeu côté entraînement (1) de telle sorte que, dans le cas d'une couronne fixe, une rotation du moyeu côté entraînement (1) conduit à une rotation plus rapide d'une roue solaire centrale.

13. Engrenage planétaire selon la revendication 12, une rotation d'un axe de roue solaire, sur lequel la roue solaire est agencée de manière fixe en rotation, pouvant être transmise en tant qu'entraînement pour un autre étage d'engrenage monté en aval du porte-satellites, puis finalement à une machine montée en aval de l'étage d'engrenage.

14. Utilisation d'un engrenage planétaire selon la revendication 12 ou 13, une introduction de couple étant effectuée sur le moyeu côté entraînement.

15. Installation d'énergie éolienne avec une transmission d'énergie éolienne, dans laquelle est utilisé un porte-satellites selon l'une quelconque des revendications 1 à 10, des couples pouvant être introduits dans le porte-satellites du côté de l'entraînement.
